# EUROPEAN PATENT SPECIFICATION

(11) **EP 0 554 818 B1**
(45) Date of publication and mention of the grant of the patent: **06.05.1998**
(21) Application number: 93101520.0
(22) Date of filing: 01.02.1993
(51) Int. Cl.: C08B 37/00, C08B 30/00

(54) **Purification of polysaccharides**
Reinigung von Polysacchariden
Purification des polysaccharides

(30) Priority: 07.02.1992 US 832838
(43) Date of publication of application: 11.08.1993
(73) Proprietor: National Starch and Chemical Investment Holding Corporation, Wilmington, Delaware 19809 (US)
(72) Inventor: Eden, James, East Millstone, New Jersey 08873 (US); Kasica, James, Whitehouse Station, New Jersey 08889 (US); Walsh, Leo, Sayreville, New Jersey 08872 (US); Rutenberg, Morton W., North Plainfield, New Jersey 07063 (US); Lacourse, Norman, Indianapolis, Indiana 46250 (US); Solarek, Daniel, Belle Mead, New Jersey 08502 (US)
(74) Representative: Hagemann, Heinrich, Dr.rer.nat., Dipl.-Chem.

(56) References cited:
- EP-A- 0 102 256
- EP-A- 0 499 306
- WO-A-89/04369
- DE-A- 3 839 017
- DE-C- 412 125
- US-A- 4 761 186
- US-A- 4 990 605
- ROY L. WHISTLER ET AL. 'starch chemistry and technology' 1984 , ACADEMIC PRESS INC. , NEW YORK
- CHEMICAL ABSTRACTS, vol. 98, no. 8, 21 February 1983, Columbus, Ohio, US; abstract no. 55945r, 'Purification of saccharified solutions from granular or powdered corn' page 101 ; & JP-A-57 047 499 (MITSUI TOATSU CHEMICALS INC.)
- CHEMICAL ABSTRACTS, vol. 85, no. 10, 6 September 1976, Columbus, Ohio, US; abstract no. 65152a, NAKAMURA TAMOTSU ET AL. 'Decolorizing gum arabic' page 133 ; & JP-A-51 032 599 (SANKYO FOOD INDUSTRIAL CO.)
- STARCH, Chemistry and Technology 1984, second edition, page 582

## Description

This invention relates to processes for purifying polysaccharides by removing undesirable flavors, odors and/or colors. The processes may be selected to be compatible with soluble starch hydrolysates. The invention also relates to the use of these purified polysaccharides in food products and in other applications wherein flavor, odor and/or color purity are required.

Filtration through activated carbon has been widely used in conversion processes for manufacturing monosaccharides, such as sugars and other sweeteners from starch. Syrups of glucose or dextrose and high fructose corn syrups that have been derived from starch are filtered through activated carbon to purify and decolorize the sweeteners. T.M.W. van Asbeck, et al., "The Evaluation of Activated Carbon in the Purification of Starch-Based Sweeteners", Starch/Stärke, 33:378-383 (1981).

It is well-known in the art of sugar purification that a starch which has been only partially converted to sugar and contains significant quantities of starch hydrolysates or dextrins, will take on an undesirable gray color due to the emulsification of carbon fines by the starch hydrolysates. A method for purifying starch hydrolysates wherein the problem of emulsified carbon fines has been eliminated is disclosed in European Patent Application Pub. No. 0 495 407A1.

Steam-stripping processes have been used to purify fats and oils and flavors and fragrances. The use of steam-stripping to purify polysaccharides has not been reported.

DE-C-412125 discloses a process for the preparation of white vegetable glue. A suspension of starch and an alkali or alkaline carbonate is heated on a steam bath under reduced pressure. The steam evolved is continually drawn off. The object is to remove objectionable resinous by-products which discolour the starch base or preferably prevent the formation of the by-products.

Earlier European patent application 0 499 306 relates to a method for improving the flavour of starch comprising incubating the starch with an enzymatically active peptidase containing cell preparation under such conditions that enzymatic peptidolysis of a substantial amount of oligopeptides in the starch is the result, which incubation is, optionally, preceded or followed by a non-enzymatic purification step such as steam stripping or solvent extraction.

Processes known in the art for purifying starch using ultrafiltration are limited to the treatment of starch in insoluble form, whereby the insoluble starch may be readily separated from an aqueous wash.

Likewise, although many food ingredients have been subjected to bleaching steps during commercial processing to remove color (e.g. flour), the use of food grade bleaching agents to purify soluble starch hydrolysates by removing undesirable flavors and odors, as well as reducing color, has not been reported.

In spite of advances known in the art, there is an important industrial market for new hydrolysates of starch and other polysaccharides having a bland taste, with little or no sweetness, that are available in the form of a non-hygroscopic powder. These hydrolysates are useful as fat mimetic or fat replacers, and as carriers for synthetic sweeteners, flavors and fragrances, coloring agents and the like. They are also useful as spray-drying adjuncts for beverages (e.g., coffee or tea) and flavors and fragrances. They are useful as bulking agents, bodying and dispersing agents in foods such as coffee whiteners and as moisture binding agents in breads, pastry and meat products, particularly in low fat formulations of these foods. The unconverted starches, gums and other polysaccharides are also useful as thickeners, bodying agents and texture modifying agents in puddings, fruit products and frozen desserts and ice creams.

Starch in its native form, and starch hydrolysates that have been prepared by the acid, thermal, enzymatic and oxidative hydrolysis processes known in the art, each contain a variety of contaminants that contribute undesirable flavors (e.g., a "cereal" flavor), odors and colors to foods. Many other polysaccharides, such as food gums, in their native form also contain undesirable flavors, odors and colors. In addition, the presence of simple sugars or the presence of oligosaccharides may be undesirable in polysaccharide hydrolysates. Thus, there is a need for processes which remove such impurities from polysaccharide hydrolysates.

A steam-stripping process suitable for the removal of flavor and odor impurities from polysaccharides, including soluble starch hydrolysates, is disclosed herein. This process may be used in combination with other purification processes, such as ultrafiltration, an ion exchange process or treatment with activated carbon, as well as with a bleaching process. Soluble starch hydrolysates may also be purified by a combination of ultrafiltration and bleaching or by a combination of activated carbon treatment and bleaching. In these processes, the polysaccharide (or the soluble starch hydrolysate) that is produced is bland in flavor, substantially free of off-odors, and, optionally, light or white in color and suitable for use in food systems requiring these characteristics.

The purified polysaccharides are generally useful in edible products. The purified starch hydrolysate products are useful in low or no fat spreads, and margarines, frozen desserts, low fat sour cream and cheese, fortified skim milk, white or cream sauces, including alfredo sauce and other cheese-containing sauces, frozen, dry and jarred or canned prepared sauces, cream soups, low fat cheese spreads, coffee whiteners, dry cocoa mixes and other drink mixes, whipped dairy toppings, artificial sweeteners, puddings and pie fillings including low fat puddings and pie fillings, cakes, baked goods and pastries, low fat baked goods, cakes and pastries and other dairy and low fat products. The purified polysaccharides, including the starch hydrolysate products, are also useful in pharmaceutical products as binders, diluents and the like.

The steam-stripping process disclosed herein for removal of undesirable flavors and odors from soluble polysaccharides, comprises the steps:
a) dispersing the polysaccharide at 1 to 40% solids in an aqueous medium;
b) solubilizing the dispersed polysaccharide;
c) feeding the solubilized polysaccharide into a steam-stripping column fitted with inert packing material;
d) feeding a countercurrent of steam against the solubilized polysaccharide in the apparatus at a steam pressure of 0.35 to 21.1 kg/cm² (5 to 300 psig);
f) removing the steam from the apparatus; and
e) recovering the solubilized polysaccharide.

Where an insoluble polysaccharide product is desired, the polysaccharide is slurried in water before steam-stripping and the process is carried out under a vacuum at temperatures below the temperature where the polysaccharide becomes fully dispersed and/or water-soluble (e.g., the gelatinization temperature of starch). Accordingly, there is also disclosed herein a low temperature steam-stripping process for removal of undesirable flavours and odors from insoluble polysaccharides, comprising the steps:
a) making a slurry of the polysaccharide at 1 to 40% solids in an aqueous medium;
b) feeding the polysaccharide slurry into a steam-stripping column fitted with inert packaging material;
c) maintaining the steam-stripping apparatus under vacuum at a column pressure of -0.35 to -1.02 kg/cm² (-5 to -14.5 psig);
d) feeding a countercurrent of steam against the polysaccharide slurry in the column at a temperature less than 100°C;
e) removing the steam from the column; and
f) recovering the steam-stripped polysaccharide.

This process optionally includes the additional step of bleaching the polysaccharide.

The following purification process combinations are disclosed herein for removal of undesirable flavors, odors and/or colors from polysaccharides:
1. Ultrafiltration and steam-stripping;
2. Steam-stripping and carbon treatment;
3. Ion exchange treatment and steam-stripping; and

These processes may be carried out in any order. A bleaching process may precede any of these processes. If ozone or a peroxide bleaching agent is employed, the bleaching step may follow any of these processes. Any of the processes may be combined with other processes disclosed herein to provide additional purification measures.

The polysaccharide raw material may be either soluble or insoluble in water. All of the processes of this invention are particularly useful for purification of soluble polysaccharide hydrolysates, such as dextrins.

The processes of this invention may be carried out on any polysaccharide raw material, except that the carbon treatment is limited to polysaccharides in a water soluble (e.g., gelatinized starch or dispersed gum) form.

As used herein, "soluble" means that the polysaccharide in powdered form may be readily hydrated and dispersed in water or other aqueous medium to provide a polysaccharide solution in the form of a complex colloidal dispersion, rather than a true molecular solution. Some polysaccharides do form a true molecular solution (e.g., pectin, high D.E. dextrins). It may be necessary to heat the polysaccharide to fully hydrate and disperse it.

The term "polysaccharide" as used herein refers to starches, gums, dextrans, celluloses, and heteropolysaccharides, and derivatives thereof, hydrolysates thereof, crosslinked products thereof and combinations thereof.

The term "maltodextrin" refers to glucose polymers having a dextrose equivalent (D.E.) of less than 20. Maltodextrins preferred for use in the process of this invention have a D.E. less than or equal to 10, preferably a D.E. of less than 5, most preferably a D.E. of 0.5 to 5. The term "dextrose equivalent" refers to the reducing power (or the reducing sugar content) of starch hydrolysates calculated as dextrose (dextrose or glucose has a D.E. = 100) on a dry weight basis. Maltodextrins having a high D.E. have lower molecular weights (are more highly converted) than those having a low D.E.

Also preferred for use as raw materials in the processes of this invention are starch hydrolysates, including fluidity starches having a water fluidity (WF) value of 30 to 85, prepared by acid, enzyme (e.g., alpha-amylase) or oxidative conversion processes known in the art; enzymatically debranched starches comprising up to about 85% short chain amylose; and dextrins (pyrodextrins) derived by subjecting starch to dry, thermal and/or acidic degradation processes to yield a dextrin having an anhydrous borax fluidity (ABF) value of 8 to 1. (A viscosity of a dextrin having an ABF of 8 is roughly equivalent to the viscosity of a 70 WF acid-converted starch.) The "ABF value" is the ratio of the amount of water to the amount of dextrin when the latter is cooked for five minutes at 90°C (195°F) with 15% of borax on the weight of dextrin, so as to provide a dispersion having a viscosity, when cooled to 25°C (77°F), of 70 centipoises. Higher ABF values are associated with higher molecular weight dextrins.

The debranched starches suitable for use herein are described in US-A-4,971,723. In addition to the partially debranched starches disclosed therein, fully debranched starches (i.e., containing about 85% short chain amylose) that have been treated with an endo-alpha-1,6-glucanohydrolase, such as pullulanase, may be used in the processes herein.

Where a low viscosity starch is desirable, a starch, such as waxy maize, which has been converted to a Water Fluidity (WF) of up to about 60 is preferred. Water Fluidity is an empirical measure of viscosity on a scale of 0-90, wherein fluidity is the reciprocal of viscosity.

Other low molecular weight (e.g., a molecular weight of about 500 to 500,000) polysaccharides useful herein include degraded or depolymerized food gums, and other heteropolysaccharides, hemicelluloses, cellulosic materials, food fibers and dextrans. "Food fibers" refers to those polysaccharides from plants sources that are neither starches, celluloses, gums nor any other polysaccharide specifically mentioned herein. Any of these polysaccharides may be degraded by any method known in the art, preferably by treatment with acid or enzyme. Suitable gums include guar gum, locust bean gum, carob seed gum, tamarind seed gum, konjac gum, xanthan gum, alginates, agar, pectin, gum arabic and carrageenan. Suitable cellulosic materials include cellulose, alpha-cellulose, microcrystalline cellulose, carboxymethylcellulose, methylcellulose, hydroxymethylcellulose, and hydroxyethylcellulose.

If the polysaccharide is to be modified prior to purification by the processes herein, such modification may be carried out by any method known in the art and in any combination thereof. In a preferred mode, conversion, derivatization and crosslinking modifications are carried out on the polysaccharide in an insoluble form (e.g., granular starch). While modifications may be carried out after purification, it is generally desirable to complete modifications first so that reagents, salts, and other reaction byproducts may be removed during purification.

These modifications, such as derivatization of starch, cellulose, heteropolysaccharides and gums to form ester or ether-linked substituents along the polysaccharide backbone, are well known in the art and described in publications such as M.W. Rutenberg, "Starch and Its Modifications" P. 22-36, in Handbook of Water-Soluble Gums and Resins, R.L. Davidson, editor, McGraw Hill, Inc., New York, New York, 1980.

In a preferred embodiment wherein the polysaccharide is starch, the starch is treated with octenylsuccinic acid anhydride (OSAA) to form a starch ester derivative containing from 0.25 to 3.0%, by weight, of octenylsuccinate prior to purification by steam-stripping, ultrafiltration, carbon treatment or ion exchange treatment or a combination thereof. The OSAA treated polysaccharides are preferably not bleached because the bleaching agents can remove octenylsuccinate substituents from the polysaccharide at pH extremes. Bleaching may be carried out at moderate pH values.

### Steam-stripping

In this process, a slurry or a dispersion of polysaccharide is permitted to flow down a column packed with inert solid support against a countercurrent of culinary-grade steam. The steam volatilizes and carries away many of the flavor compounds, and their precursors, that are known to cause off-flavors (e.g., corn-like, beany, musty, burnt, earthy, etc.) in polysaccharides. The steam carrying its complement of flavor compounds is removed from the top of the column and condensed. The purified polysaccharide slurry or dispersion is recovered from the steam, preferably at the bottom of a column. The process is preferably continuous, but may be performed in batch operations.

To maintain an efficient column purification process, the steam must be maintained as the continuous phase and "flooding" of the column by excess feed material must be avoided. Various types of suitable process conditions and equipment designs are known in the art and described in publications such as Perry's Chemical Engineers' Handbook, 6th Edition, 1984, McGraw Hill Book Company, New York, New York, Chapter 18.

Although a variety of temperature and pressure ranges for the feed, the steam and the column, or other suitable apparatus, may be selected to complement the polysaccharide raw material and the intended product, conditions are broadly determined by whether the product is to be in water-soluble or insoluble form. For the water-soluble product, column steam pressure may range from 0.35 to 21.1 Kg/cm² (5 to 300 psig), preferably 0.70 to 2.8 Kg/cm² (10 to 40 psig), feed temperature from 55 to 200°C, preferably 80 to 200°C, and steam temperature from 55 to 200°C, preferably 115 to 140°C. For the insoluble product, column pressure under vacuum may range from -0.35 to -1.02 Kg/cm² (-5 to -14.5 psig), preferably -10 to -14.5 psig, feed temperature from 25 to 80°C, preferably to 55 to 80°C, with a steam flow rate of 6.3 to 1054.6 Kg/hour/M² (15 to 2,500 lbs/hour/ft²), preferably 63.3 to 632.8 Kg/hour/M² (150 to 1,500 lbs/hour/ft²). The soluble product may be steam-stripped at atmospheric pressure; the insoluble product must be steam-stripped at less than atmospheric pressure, preferably under a 0.35 to -1.02 Kg/cm² (-5 to -14.5 psig) vacuum, so as to avoid cooking the starch or gum and producing a fully dispersed or a soluble product.

The rate of feed may range from 0.106 to 13.2 Liters/minute/M² (0.03 to 3.75 gallons/minute/square foot of cross-sectional area of the apparatus (gal/min/ft²)), preferably about 10.56 l/min/m² (3.0 gal/min/ft²), for a 1 to 40% solids slurry or dispersion. Suitable feed rates will vary depending upon the scale of the operation (e.g., laboratory vs. manufacturing scale), the packing materials, steam temperature and pressure and the viscosity and other rheological characteristics of the polysaccharide raw material in a slurry or dispersion. For example, on a laboratory scale apparatus using a glass column ranging from 10.2 cm (4") in diameter X 91.4 cm (36") in height to 15.2 cm (6") in diameter X 304.8 cm (120") in height, a rate of feed from 0.106 to 3.52 l/min/m² (0.03 to 1.0 gal/min/ft²) is suitable.

The viscosity of the feed material should be adjusted to less than 300 cps at the operating temperature of the column, preferably less than 100 cps at the column temperature, and most preferably 1 to 10 cps at column temperature. At a flow rate of about 10.56 l/min/m² (3.0 gal/min/ft²), and with steam at 80 to 200°C and 0.70 to 2.8 Kg/cm² (10 to 40 psig), the feed solids content of a soluble starch hydrolysate dispersion is preferably 15 to 25%. For a higher molecular weight, more viscous soluble polysaccharides, such as fully dispersed high amylose corn starch or locust bean gum, the solids content of the feed is preferably 10 to 20% at a feed flow rate of 7.04 l/min/m² (2.0 gal/min/ft²) and steam at 80 to 200°C and 0.70 to 2.8 Kg/cm² (10 to 40 psig). The practitioner will recognize that lower flow rates and lower percentages of solids in the feed will not be economical, whereas higher flow rates and solids may exceed the capacity of the steam-stripping apparatus for removal of flavors and odors. High solids may create a feed viscosity that is too high to run on the apparatus. Conditions suitable for a variety of polysaccharides are described in the examples, below.

The apparatus may be selected from a variety of designs known in the art, preferably vertical column designs that permit gravity feed of the slurry or dispersion against an upward flow or countercurrent of steam. The apparatus must be constructed of inert materials that will not contribute off-flavors, odors or colors or other contaminants to the polysaccharide. Packing materials for the apparatus may be selected from any of a variety of commercially available proprietary designs. A column apparatus is preferably packed with packing materials that provide high contact surface area and permit high flow rates (e.g., glass beads, stainless steel rings or other stainless steel packing material) . The steam-stripping apparatus may be linked to an apparatus for cooking or drying the polysaccharide or to an apparatus for carrying out bleaching steps or other purification steps. A source of culinary steam, or a means for removing odors, colors and flavor contaminants from other types of steam, is an essential element of the apparatus used in this process. Suitable apparatus designs are described in the examples, below.

The steam-stripping process may be carried out in conjunction with other purification processes described herein, including ultrafiltration, treatment with activated carbon, bleaching and ion exchange treatment, or any combination thereof. If bleaching is carried out after steam-stripping the bleaching agent must be selected such that it is consumed by the process and no residual reagent remains to create off flavors. All other purification processes may be carried out in any order, before or after steam-stripping.

In a preferred mode, steam-stripping is combined with ion exchange treatment or ultrafiltration to remove salts and other low molecular weight non-volatile contaminants as well as volatile off-flavors and odors.

In another preferred mode, bleaching is carried out followed by steam-stripping to remove color, flavor and odor contaminants and their precursors.

### Bleaching

In this process, a slurry or dispersion of polysaccharide is brought into contact with selected bleaching agents to remove off-flavors, odors and/or colors. Process conditions are selected to be mild enough to avoid any significant degradation of the polysaccharide (i.e., oxidative conversion to a lower molecular weight) but strong enough to improve flavor, odor, and, optionally, color of the polysaccharide. The bleaching agents useful herein include chlorite salts, such as sodium chlorite, hypochlorite salts, such as calcium or sodium hypochlorite, peroxides, such as hydrogen peroxide or peracetic acid, persulfate salts, such as sodium, potassium or ammonium persulfate, permanganate salts, such as potassium permanganate, chlorine dioxide, and ozone. Bleaching is carried out in conjunction with other purification processes.

To avoid polysaccharide degradation, the polysaccharides are treated with a concentration of bleaching agent that is at least at a magnitude of 10⁻¹ times less than the limits set by the U.S. Food and Drug Administration for chlorine (as sodium hypochlorite) used in degrading starch to produce modified food starch (i.e., a maximum of 5.5% chlorine on a starch dry weight basis is permitted).

Polysaccharides are preferably treated with 0.1 to 0.5%, on a polysaccharide dry weight basis, of sodium chlorite at a solution pH of 3.0 to 4.5 and a temperature of 25 to 95°C for a period of time effective to remove undesirable flavors and odors and create a product that is lighter in color. Depending on temperature, level of contamination and chlorite concentration, the requisite time may range from about 10 or 15 minutes to 1 to 3 days.

In a preferred embodiment, a dispersion of about 14 to 25% starch hydrolysate is treated with 0.1 to 0.5%, preferably 0.19%, sodium chlorite, on a starch dry weight basis, at a pH of 3.0 to 4.5 and a temperature of less than 100°C, preferably 80 to 95°C, for 1.5 hours. This reaction will consume all active chlorine and bleach the starch to yield a light-colored or a white product, having less intense brown, tan or yellow colors. The same reaction may be carried out at 25°C for about 12 to 18 hours. The bleaching is carried out in a Teflon® coated vessel or in some other vessel constructed with inert materials in all bleaching agent contact surfaces. Stainless steel and other metals are generally not suitable for use in the bleaching process if a strong oxidant, such as sodium chlorite, is used. Peroxides may be used in stainless steel vessels.

In a preferred embodiment the bleaching process is carried out before steam-stripping, ultrafiltration, carbon treatment or ion exchange treatment, or a combination thereof, so as to remove any residual bleaching agent from the polysaccharide.

In another preferred embodiment, the bleaching agent is selected from the peroxide agents, ozone and any other bleaching agent that is consumed by the process without creating undesirable by-products or contaminants. In this embodiment, the bleaching process may be carried out before or after or in between the other purification processes, alone or in combination.

### Ultrafiltration

The ultrafiltration process employs a semi-permeable membrane having a minimum molecular weight cut-off (MWCO) of about 1,000 to separate a bleached polysaccharide slurry or dispersion from low molecular weight contaminants (i.e., a molecular weight of less than 1,000) so as to improve flavor, odor and/or color qualities of the polysaccharide. The "MWCO" is the molecular weight of a globular solute at which the solute is 90% rejected by the membrane. The slurry or dispersion is fed or pumped through an ultrafiltration apparatus at a pressure less than 100 psig (7 Kg/cm²) to avoid breakage of polymer membranes while insuring adequate amounts of separation and an economical flow rate. Pressures greater than 100 psig can be used with ceramic or metallic membranes. The contaminants pass through the membrane, while the polysaccharides are retained by the membrane so as to effect their separation. The polysaccharide slurry or dispersion is collected and further purified or dried.

In a preferred embodiment, the ultrafiltration process is carried out while maintaining a constant amount of feed water (i.e., as a diafiltration process) so as to provide additional, continuous polysaccharide washing during filtration.

The apparatus comprises a feed tank for holding the dispersion or slurry with agitation, a pump for moving the feed past the membrane, a means for supplying deionized water, a means for removing the permeate and a means for removing the retentate. Any ultrafiltration apparatus known in the art may be used herein, provided that it is equipped with a suitable membrane that can effectively separate lower molecular weight flavor, odor and/or color contaminants.

Suitable membranes include conventional ultrafiltration membranes having flat, tubular, spiral, hollow fiber or other configurations. The membrane may be constructed from cellulose derivatives (such as cellulose acetate), polyamide, fluorocarbon, polysulfone and other suitable materials.

In a preferred embodiment, a Prolab Ultrafiltration Unit (obtained from Millipore Corporation, Bedford, Massachusetts) is equipped with an Amicon® 100,000 MWCO polysulfone filter (obtained from Amicon Division, W.R. Grace & Company, Beverly, Massachusetts).

For flavor improvement of soluble polysaccharide hydrolysates, a 30,000 MWCO filter is preferably used, and a 10,000 MWCO filter is most preferably used. A 1,000 MWCO filter also may be used. Better polysaccharide yield (e.g., 88% versus 84%) is obtained with 30,000 or 10,000 versus 100,000 MWCO filters. Higher flux rates (i.e., rates of permeate flow through the membrane) are possible with 100,000 or 30,000 versus 10,000 MWCO filters (e.g., 25 ml/min versus 20 mls/min). In general, a membrane having a MWCO of about 10⁻¹ times less than the molecular weight of the polysaccharide is preferred (e.g., soluble starch hydrolysates used as fat mimetic in foods [having average molecular weights of about 300,000 to 750,000] are preferably filtered with a 30,000 MWCO membrane). Thus, the practitioner may be guided by the molecular weight of the polysaccharide that will be filtered in selecting an appropriate membrane. Other polysaccharide characteristics such as molecular shape and tendency to aggregate will also guide the practitioner.

To complete purification of the polysaccharide, the ultrafiltration process may be combined with a bleaching process, as disclosed herein, or with steam-stripping, ion exchange or carbon treatment, or a combination thereof. Bleaching is preferably carried out before ultrafiltration, but the other processes may be carried out in any order.

### Ion Exchange Treatment

An ion exchange treatment may be used in combination with the steam-stripping processes disclosed herein, with or without an additional bleaching step, to remove off-flavors, odors and/or colors from polysaccharides. These processes may be carried out in any order. While ion exchange treatment may be used in conjunction with ultrafiltration, it is typically used in lieu of ultrafiltration. In the ion exchange treatment a slurry or a dispersion of the polysaccharide is brought into contact with suitable resins such that undesirable salts, colors and other contaminants are removed from the polysaccharide slurry or dispersion.

In a preferred embodiment the polysaccharide slurry or dispersion is treated by feeding it into a column packed with an anion ion exchange resin and then feeding it onto a column packed with a cation exchange resin.

An "anion exchange resin" is a solid polymeric material that has a positively charged matrix and exchangeable negative ions or anions. A "cation exchange resin" is a solid polymeric material that has a negatively charged matrix and exchangeable positive ions or cations.

In another preferred embodiment, only one type of resin is used in the process. Where only one type of resin is used, anion exchange resin is preferred. Suitable anion exchange resins include epoxy resin-based polymers (e.g., an epoxy-amine polymer). Suitable cation exchange resins include acrylic acid copolymers (e.g., an acrylic-divinylbenzene copolymer); and sulfonic acid-containing copolymer compositions of styrenedivinylbenzene. A variety of suitable resins of the anion exchange variety, and conditions for their use and preparation are disclosed in US-A-4,988,807 , which is hereby incorporated by reference.

The flow rate of the process and the size of the column to be used are a function of: the amount of undesirable material in the polysaccharide, the resin being used, and the amount of undesirable material to be removed. The exact values for each of these parameters must be adjusted to meet the desired results. In general, the amount of removal of undesirable material is a function of the contact time of the polysaccharide slurry or dispersion with the resin, with longer contact times given to more highly purified polysaccharides. For a given amount of removal of undesirable material, the required contact time can be achieved by numerous combinations of flow rate and column size. Typically, the flow rates range from about 0.0035 to 35.2 l/min/m² (0.001 to about 10.0 gallons per minute per square foot) of resin cross-section (gal/min/ft²), preferably from about 0.35 to 7.04 l/min/m² (0.1 to about 2.0 gal/min/ft²).

The acceptable level of undesirable material in the polysaccharide remaining after treatment, or, alternatively, the amount of undesired material to be removed from the polysaccharide during treatment will depend on the specific end use for which the polysaccharide is intended. Thus, an effective level of removal of the undesired material will be dictated by specific consumer or industrial need requirements of the final product and, as such, will vary from final product to final product.

The process is typically operated at elevated temperatures of about 50° to about 100°C. For certain polysaccharides, such as methylcellulose which may precipitate or gel at elevated temperatures, ambient temperatures of about 15° to about 35°C are effective. This gelling or precipitation could cause the column to be blocked; thereby, inhibiting the flow of the aqueous solution through the column. Where other polysaccharides, especially soluble or fully dispersed polysaccharides (e.g., gelatinized starch) are used, elevated temperatures are preferred. Elevated temperatures are required for effective treatment of gelling starches and gelling starch hydrolysates.

Several factors may affect the efficiency of the removal of undesirable material from the polysaccharide containing such undesirable material, with the main concerns being the viscosity, pH, and salt content of the polysaccharide slurry or dispersion. The polysaccharide slurry or dispersion should not be so viscous that reasonable flow rates, as described herein, cannot be achieved without resorting to excess column pressures to force the slurry or dispersion through the column. Typically accepted pressures to aid in the process are from about 0.70 Kg/cm² to 21.1 (1 to about 300 psig), preferably from atmospheric pressure to about 5.62 Kg/cm² (80 psig).

A preferred embodiment for purifying polysaccharides using ion exchange treatment in conjunction with carbon treatment and bleaching is disclosed in the examples, below. Depending upon the polysaccharide raw material characteristics and the requirements of the end use application, the practitioner may readily select resins and conditions known in the art to optimize the ion exchange step within the polysaccharide purification process.

### Carbon Treatment

The carbon purification process described in European Patent Application Pub. No. 0 495 407A1, may be used in combination with bleaching and with any other purification process disclosed herein, in any order, to purify soluble polysaccharides in dispersed form.

In a preferred embodiment, a starch hydrolysate is bleached, steam-stripped and treated with activated carbon to remove objectionable flavors, odors and colors. An apparatus and process for carbon treatment suitable for use in this embodiment are described in the examples, below.

Any carbon purification treatment known in the art may be used in combination with the steam-stripping, ion exchange, ultrafiltration and bleaching processes herein, provided that emulsification of carbon fines by the polysaccharide is controlled such that a gray color does not develop in the carbon-treated polysaccharides. This gray color is created by the emulsified carbon fines and neither bleaching nor the other purification steps disclosed herein can remove this color.

### Foods and Pharmaceuticals

The organoleptic qualities of polysaccharide-containing edible products may be improved by substituting the purified polysaccharides of this invention for the conventional polysaccharides (or other components) of the edible product in amounts from about 0.05 to 100%, preferably 1 to 50%, by weight, of the edible product. The degree of flavor, odor and/or color improvement observed is proportional to the percent of polysaccharide used in the edible product, to the absence of strong flavors and odors in the edible product, and to the whiteness of color normally associated with the edible product.

Thus, the polysaccharides that have been purified by the processes of this invention are preferably used to formulate the following types of foods:
low or no fat spread, margarine, frozen dessert, low fat sour cream, low fat cheese, fortified skim milk, white sauce, cream sauce, alfredo sauce, cheese sauce, frozen sauce, canned sauce, salad dressing, cream soup, soup, cheese spread, coffee whitener, dry cocoa mix, whipped dairy topping, artificial sweetener, pudding, pie filling, cake, baked goods, pastry, low fat baked goods, low fat salad dressing, and low fat dairy products.

Among the low or no fat foods (i.e., foods containing essentially no fat or no more than 30% of the fat normally associated with the food), starches that have been degraded with acid, heat, oxidative or enzyme treatment, or a combination thereof, to yield a starch hydrolysate having a D.E. of less than 10, preferably 0.5 to 5, or an ABF value of 8 to 1, or containing at least 60% short chain amylose after debranching, and then purified as described herein, are preferred.

In particular, those starch hydrolysates that have been subjected to:
1) bleaching and steam-stripping;
2) bleaching, steam-stripping and carbon treatment; or
3) bleaching, ultrafiltration and steam-stripping
are preferred for use in low-fat foods as a fat mimetic or a fat replacer.

In another preferred embodiment, the polysaccharides purified by the processes herein are used in foods or pharmaceuticals as thickeners, bodying agents, binders, coatings, carriers or dispersants, nutrients, encapsulants, emulsifiers, stabilizers, fillers or diluents.

### Example 1

This example illustrates the bleaching of soluble starch hydrolysates to remove undesirable flavors, odors and/or colors.

An alpha-amylase-converted, pregelatinized tapioca maltodextrin (having a D.E. of less than 5) was slurried at 35% solids in deionized water and the slurry was heated to 80-90°C to disperse the starch. The dispersion was jet-cooked (in a jet-cooker obtained from National Starch and Chemical Company, Bridgewater, New Jersey) at 120-130°C (250-265°F) and transferred to a non-metallic jacketed tank.

The pH of the slurry was lowered to 3.5 with hydrochloric acid and the temperature was held at 80-95°C during treatment with an aqueous solution of food grade sodium chlorite at 0.19% sodium chlorite on a dextrin dry weight basis. The bleaching continued with mixing until the residual chlorite was consumed (visually, bleaching was completed in 3-10 minutes). In a 94.6-132.5 liter (25-35 gallon) batch, the bleaching agent was completely consumed in 1 to 1.5 hours as measured by a colorimetric potassium iodide spot test. (In this test, any residual bleaching agent present in a test sample of the starch dispersion will oxidize the potassium iodide reagent to yield iodine at a pH of 3.5. The iodine then forms a complex with starch that is blue in color.) In batches containing excess chlorite, a dilute sodium bisulfite solution was used to neutralize the bleaching agent. Following bleaching, the pH was raised to 6.5 with sodium hydroxide.

### Example 2

Undesirable flavors and other contaminants were removed from an alpha-amylase enzyme-converted, pregelatinized tapioca maltodextrin (having a D.E. less than 5) using a steam-stripping process, alone and in combination with the bleaching process of Example 1.

In the steam-stripping process a stainless steel column measuring 15 cm (6 inches) in diameter and 1.22 meter (4 feet) in height was packed with 1.78 cm (0.7 inch) in diameter 316 stainless steel rings (obtained from Nutter Engineering, Tulsa, Oklahoma). In subsequent trials a high surface area, structured packing material supplied as cylindrical pieces measuring 15 cm (6 inches) in diameter and 21.6 cm (8.5 inches) in height (Montz B1-400, 316 stainless steel packing, obtained from Nutter Engineering, Tulsa, Oklahoma) was used in lieu of the rings. In subsequent trials a 10 foot column was used in lieu of the 4 foot column.

The bottom of the column was fitted with a 0.16 cm (0.062 inch) thick stainless steel plate, perforated with 0.31 cm (0.122 inch) holes, and with a bottom dome connected to a steam condensate trap (TLV model SS3V, with a #21 orifice, obtained from TLV America, Charlotte, North Carolina) and a starch outlet. The stripping steam (generated from deionized water) entered a fitting at the side of the bottom dome of the column at a maximum pressure of 4.22 Kg/cm² (60 psi) with a maximum flow of 15.88 Kg/hour (35 pounds/hour). The steam flowed upward through the column, countercurrent to the starch flow. The steam exited the column through a 1.27 cm (1/2 inch) pipe fitting at the side of the dome at the top of the column. Constant steam pressure in the column was maintained with a diaphragm back pressure valve (Fisher model 98L, obtained from Fisher Controls, Marshalltown, Iowa).

The column and all piping used in the steam-stripping apparatus were insulated to prevent heat loss.

The dispersed starch was fed directly, under pressure, from the column through 0.64 cm (1/4 inch) stainless steel tubing into the nozzle of a spray-dryer. The spray-dryer was a 1.22 meter (4 feet) in diameter Niro laboratory scale spray-dryer with air inlet temperatures of 200-250°C and outlet temperatures of 115-120°C. After spray-drying, the starch had a moisture content of about 4-5%.

The steam-stripping process produced a purified tapioca maltodextrin having improved flavor and organoleptic qualities in aqueous dispersions compared to an untreated control (an alpha-amylase enzyme-converted pregelatinized tapioca dextrin having a D.E. of less than 5). These improvements were observed irrespective of whether the dextrin had been bleached. (See Table II.) Similar improvements were observed in samples prepared under each of the operating conditions listed in Tables I and II, below. In general, steam-stripping flavor improvements were most significant at starch dispersion solids of at least 14% (e.g., a taste panel preferred Batch Nos. 11 and 12 that were stripped at solids of 25 and 14%, respectively, over Batch No. 13 at 10% solids). More significant improvements were also observed in samples that were steam-stripped at the higher ranges of temperature and higher steam flow rates that were tested in the steam-stripping apparatus designs described above.

Tapioca dextrins that had been bleached and steam-stripped were preferred (had a blander flavor and no gray, brown or tan off-colors) over a control dextrin and a control dextrin that had been only steam-stripped.

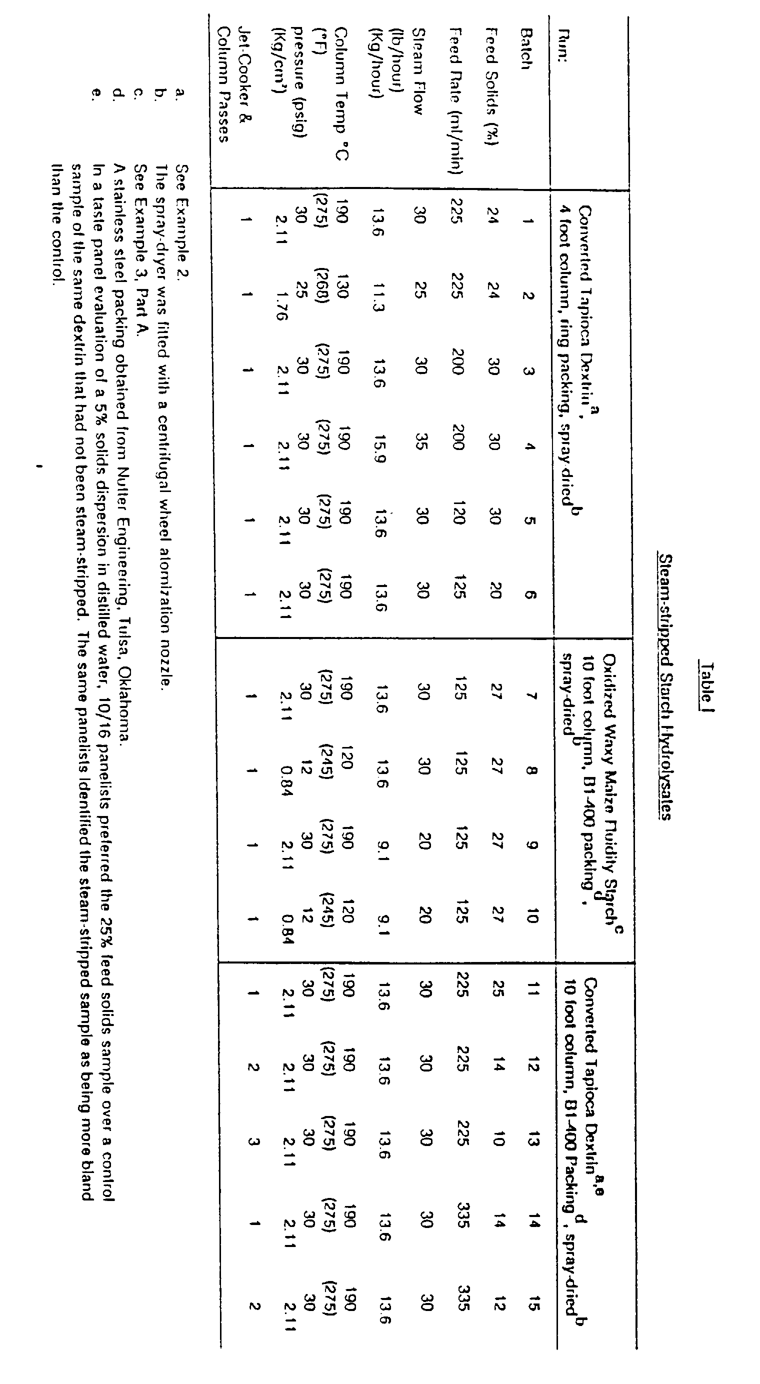

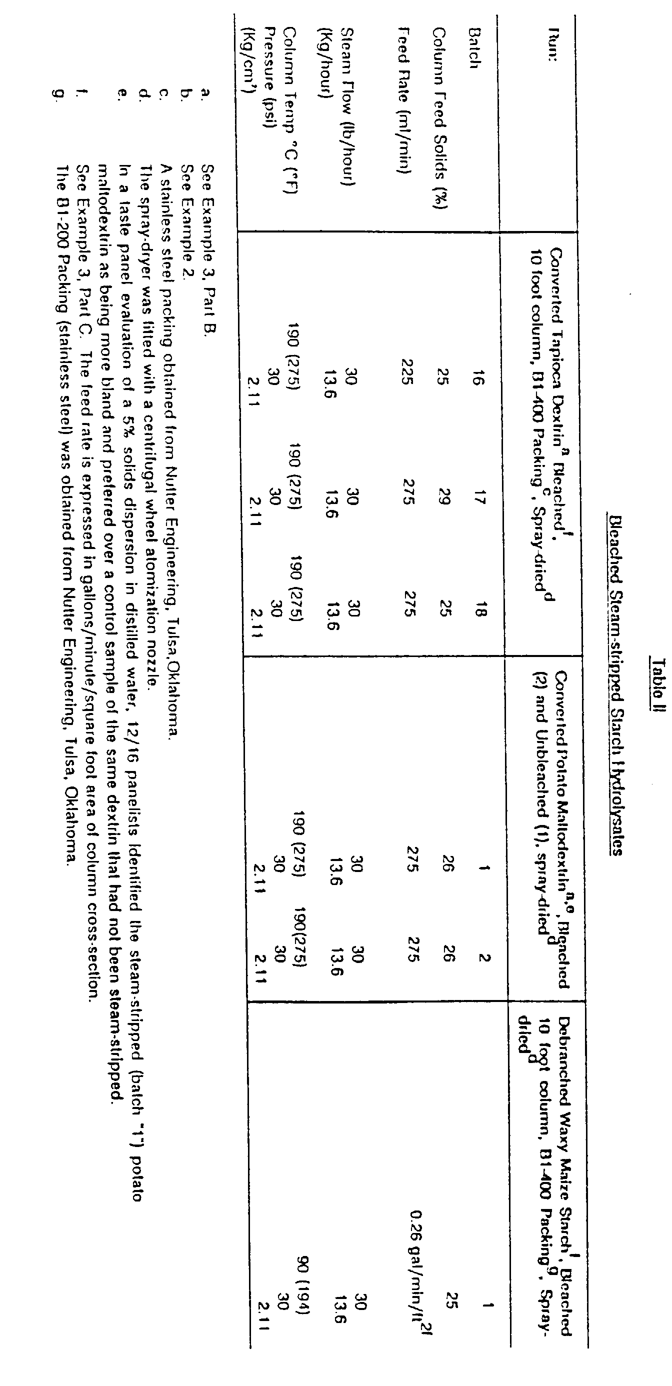

### Example 3

**Part A** Several batches of an oxidized (treated with sodium hypochlorite at 5% active chlorine, on a starch dry weight basis, to give a 40WF fluidity starch) waxy maize fluidity starch were steam-stripped under conditions described in Table I and compared to a control that had not been steam-stripped. Flavor improvements were observed in each of the steam-stripped batches.
**Part B** An alpha-amylase enzyme-converted potato maltodextrin (Paselli SA2 dextrin, obtained from Avebe Company, Veendam, Holland) was steam-stripped, with and without a preliminary bleaching treatment by the method of Example 1 under the conditions set forth in Table II. Flavor and color improvements relative to a control sample were observed in each of the steam-stripped samples. The bleached, steam-stripped potato maltodextrin was preferred. A taste panel found a 5% solids dispersion of the control maltodextrin to be musty, astringent, starchy and brown in comparison with the treated samples.
**Part C** An enzymatically debranched (jet-cooked and treated with 9.4% pullulanase, on a starch dry weight basis, at pH 5.0 and 58 to 60°C, to yield a product having a funnel viscosity of 10 to 14 seconds at 25°C and 19% solids and comprising about 65% short chain amylose), spray-dried waxy maize starch was dispersed in water, heated to 90°C (197°F), bleached with 0.19% sodium chlorite at a pH of 3.0 to 3.5 for 1.5 hours in a teflon-coated vessel and steam-stripped under the conditions described in Table II. This product was compared to a control that had neither been bleached nor steam-stripped. Flavor improvements were observed in the steam-stripped sample. 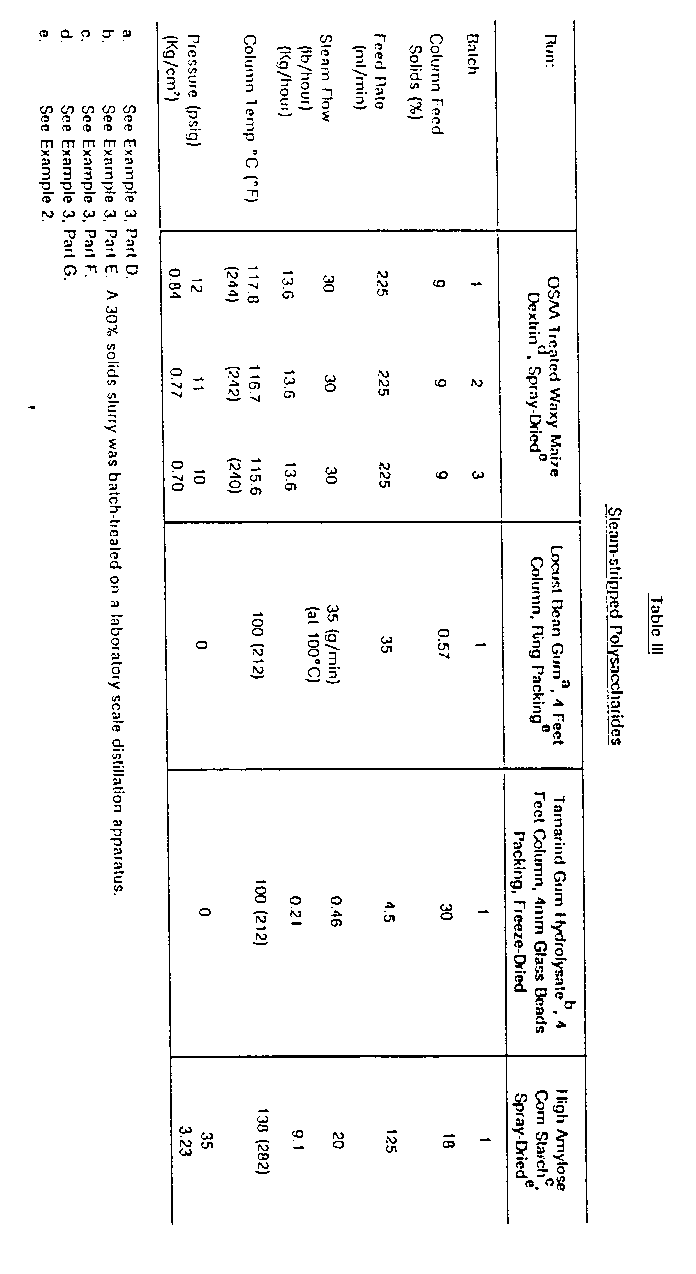
**Part D** Locust bean gum (obtained from National Starch and Chemical Company, Bridgewater, New Jersey) was slurried at 2% solids in de-ionized water and jet-cooked (as in Example 1) to 149°C (300°F). The resulting cooked gum dispersion at 0.95% solids was too viscous and was diluted with de-ionized water to 0.573% solids prior to steam-stripping.
   The dispersed gum was fed into the 4 foot column, ring packed apparatus described in Example 2 and Table III at a flow rate of 36 ml/min, and a temperature of 88°C (190°F) against a current of steam flowing at a rate of 35 g/min at 100°C. Significant taste and odor improvements were observed in an aqueous gum dispersion by a six member taste panel that evaluated the steam-stripped gum against a control that had not been steam-stripped.
**Part E** A spray-dried, enzymatically-degraded (by treatment with a cellulase) tamarind seed gum (Glyloid gum, obtained from Dianippon Pharmaceuticals, Inc., Osaka, Japan) having a D.E. of 23.5 and a molecular weight of about 650 to 2,400, was dispersed in deionized water at 30% solids and steam-stripped under the conditions described in Table III to remove flavors, odors and colors.
   The steam-stripped tamarind gum hydrolysate was freeze-dried, then reconstituted in water at 30% solids for organoleptic evaluation. Relative to a control, the steam-stripped tamarind gum hydrolysate had lost much of its characteristic beany flavor and odor, and was described as having a salty flavor with sweet afternotes and no reduction in color.
**Part F** An acid-converted (35 WF) high amylose (70% amylose) corn starch (Hylon VII starch, obtained from National Starch and Chemical Company, Bridgewater, New Jersey) was slurried in deionized water at 20% solids and jet-cooked at 138°C (218°F). The cooked starch dispersion was steam-stripped under the conditions described in Table III. When used to prepare lemon pie filling, the steam-stripped starch was free of any objectionable aftertaste.
**Part G** An OSAA-treated (3%) pyrodextrin prepared from a waxy maize starch and having an ABF viscosity of 3.5 to 7.0 was steam-stripped under the conditions listed in Table III. Flavor and odor improvements were observed in the steam-stripped sample relative to a control.

### Example 4

This example illustrates the removal of off-flavors from an insoluble, granular starch by steam-stripping under vacuum at a temperature below the gelatinization temperature of the starch.

The apparatus of Example 2 is modified by connecting the steam exhaust orifice on the column to a vacuum pump of sufficient capacity to remove the steam feed. The vacuum is controlled with a regulator installed between the pump and the column. An additional pump is installed at the starch dispersion outlet on the bottom of the column.

In this low temperature process, granular starch is slurried in deionized water at 10 to 15% solids, preheated to 55°C (131°F) and fed into the column at a feed rate of 100-125 ml/min. The vacuum regulator and pumps connected to the column are adjusted to give a column pressure of -0.87 Kg/cm² [-12.4 psig (12.4 psi of vacuum per 343.4 inch)]. The steam flow is adjusted to 13.6 to 45.4 Kg/hour (30 to 100 lbs/hour).

The steam-stripped granular starch is recovered from the dispersion by spray-drying. The powdered, granular starch product is characterized by improved flavor and odor when used in foods and pharmaceutical products.

### Example 5

This example illustrates the removal of off-flavors, odors and colors from a dextrin using a combination of ultrafiltration and steam-stripping processes.

An octenylsuccinic acid anhydride (3% treatment) derivative of waxy maize starch that had been dextrinized (treated with acid under dry heat conditions) to yield a 4 ABF dextrin is dispersed in a 1:3 ratio in distilled water. The dispersion is jet-cooked at 149°C (300°F), then is filtered hot through diatomaceous earth (200 grams of Celite 503 filter aid coated on a 32 cm Buchner funnel). The pH is adjusted to 4.0 and the cooked dispersion is fed at 14% solids into the ultrafiltration apparatus described in Example 6 and diafiltered using a 30,000 molecular weight cut-off polysulfone spiral wound ultrafiltration membrane cartridge. The temperature is maintained at 50°C and the pressure at 50 psi. The filtration is continued until the permeate level reaches 10,000 mls (from a sample prepared from 1,000 grams of starch plus 3000 mls of water).

The retentate from the ultrafiltration step is next fed into the 10 foot column steam-stripping apparatus of Example 2, fitted with Monz B1-400 packing. The retentate is fed at 14% solids at a flow rate of 225 ml/min at 190°C (275°F) under 2.11 Kg/cm² (30 psig) steam pressure against a steam flow of 13.6 Kg/hour (30 lb/hour). The product is spray-dried.

The product is characterized by improved flavor and color and lower salt content than a control that has not been ultrafiltered and steam-stripped.

### Example 6

White sauces were prepared using the soluble starch hydrolysates (dextrins) of this invention and evaluated for flavor and color.

The following white sauce formulation was used.

| **White Sauce Formulation** | | | |
|---|---|---|---|
| | Dextrin Addition | | |
| Ingredient | 1% (g) | 2% (g) | 4% (g) |
| Butter | 28.38 | 56.00 | 56.00 |
| Flour | 13.04 | 20.20 | 8.40 |
| Salt | 1.35 | 2.70 | 2.70 |
| Milk | 250.00 | 500.00 | 500.00 |
| Dextrin | 2.96 | 11.80 | 23.60 |

Sauces were prepared by melting the butter over low heat, blending in the flour and dextrin for 3-5 minutes, adding the milk and salt and cooking with stirring until the sauce thickened.

The dextrin used in the white sauce was an OSAA treated (3% on a starch dry weight basis) waxy maize starch that had been converted to an anhydrous Borax fluidity (ABF) viscosity of 3.5 to 7.0 by pyrodextrinization. The control dextrin had not been treated by the process of this invention. A sample of the dextrin (described in Table III and Example 3, Part G) had been steam-stripped by the process of Example 2 prior to use in the white sauce. The control dextrin had not been purified prior to use in the white sauce.

At the 1% and 2% dextrin usage levels, flavor and color improvements were not detected during organoleptic evaluations. At the 4% dextrin usage level, 9/10 taste panelists found the sauce made from the experimental dextrin to be more bland and cleaner in flavor than the control dextrin sauce and 10/10 taste panelists preferred the flavor of the sauce prepared from the experimental dextrin.

Thus, improved foods may be prepared using the purified and deflavored dextrins of this invention.

## Claims

1. A steam stripping process for removal of undesirable flavors and odors from polysaccharides comprising the steps
a) dispersing the polysaccharide at 1 to 40% solids in an aqueous medium;
b) solubilizing the dispersed polysaccharide;
c) feeding the solubilized polysaccharide into a steam-stripping column fitted with inert packing material;
d) feeding a countercurrent of steam against the solubilized polysaccharide in the apparatus at a steam pressure of 0.35 to 21.1 Kg/cm² (5 to 300 psig);
f) removing the steam from the apparatus; and
e) recovering the solubilized polysaccharide;
wherein the polysaccharide is characterized by an improved flavor and odor.

2. The process of Claim 1, further comprising the step of bleaching the dispersed polysaccharide prior to steam-stripping by bringing the polysaccharide into contact with a bleaching agent, selected from the group comprising chlorite salts, hypochlorite salts, peroxides, persulfate salts, permanganate salts, chlorine dioxide and ozone, for a period of time effective to improve the flavor, odor and/or color of the polysaccharide without substantial degradation of the polysaccharide.

3. The process of Claim 1, wherein the solubilized polysaccharide at a temperature of 80 to 200°C is fed against steam at 80 to 200°C at a flow rate of 0.106 to 13.2 l/min/m² (0.03 to 3.75 gal/min/ft²).

4. The process of Claim 1, wherein the process is continuous.

5. The process of Claim 1, wherein the steam is fed at a temperature of 55 to 200°C.

6. A steam stripping process for removal of undesirable flavors and odors from polysaccharides comprising the steps of:
a) dispersing the polysaccharide at 1 to 40% solids in an aqueous medium;
b) solubilizing the dispersed polysaccharide;
c) feeding the solubilized polysaccharide into a steam-stripping apparatus;
d) feeding a current of steam past the solubilized polysaccharide in the apparatus;
f) removing the steam from the apparatus; and
e) recovering the solubilized polysaccharide;
wherein the polysaccharide is characterized by an improved flavor and odor, further comprising at least one process step selected from the group consisting of
a) bleaching the steam-stripped polysaccharide by bringing the steam-stripped polysaccharide into contact with a bleaching agent selected from peroxides and ozone;
b) feeding the steam-stripped polysaccharide into an ultrafiltration apparatus fitted with a membrane having a molecular weight cutoff minimum of 1,000;
c) passing the steam-stripped polysaccharide through at least one column packed with pre-washed, granular, activated carbon at a flow rate of 0.1 to 20.0 bed volumes/hour, which column has been loaded with wetted carbon granules, back-washed and pre-heated;
d) feeding the steam-stripped polysaccharide at a flow rate of 0.0035 to 35.2 l/min/m² (0.001 to 10.0 gal/min/ft²) into an ion exchange apparatus; and
e) any combination thereof.

7. A steam stripping process for removal of undesirable flavors and odors from polysaccharides comprising the steps of:
a) dispersing the polysaccharide at 1 to 40% solids in an aqueous medium;
b) solubilizing the dispersed polysaccharide;
c) feeding the solubilized polysaccharide into a steam-stripping apparatus;
d) feeding a current of steam past the solubilized polysaccharide in the apparatus;
f) removing the steam from the apparatus; and
e) recovering the solubilized polysaccharide;
wherein the polysaccharide is characterized by an improved flavor and odor, further comprising at least one process step selected from the group consisting of
a) bleaching the solubilized polysaccharide by bringing the solubilized polysaccharide into contact with a bleaching agent;
b) feeding the solubilized polysaccharide into an ultrafiltration apparatus fitted with a membrane having a molecular weight cutoff minimum of 1,000;
c) passing the solubilized polysaccharide through at least one column packed with pre-washed, granular, activated carbon at a flow rate of 0.1 to 20.0 bed volumes/hour, which column has been loaded with wetted carbon granules, back-washed and pre-heated;
d) feeding the solubilized polysaccharide at a flow rate of 0.0035 to 35.2 1/min/m² (0.001 to 10.0 gal/min/ft²) into an ion exchange apparatus; and
e) any combination thereof,
wherein the process step is carried out before the polysaccharide has been steam-stripped and after the polysaccharide has been solubilized.

8. A low temperature steam stripping process for removal of undesirable flavors and odors from insoluble polysaccharides, comprising the steps:
a) making a slurry of the polysaccharide at 1 to 40% solids in an aqueous medium;
b) feeding the polysaccharide slurry into a steam-stripping column fitted with inert packing material;
c) maintaining the steam-stripping apparatus under vacuum at a column pressure of -0.35 to -1.02 Kg/cm² (-5 to -14.5 psig);
d) feeding a countercurrent of steam against the polysaccharide slurry in the column at a temperature less than 100°C;
e) removing the steam from the column; and
f) recovering the steam-stripped polysaccharide;
wherein the polysaccharide is characterized by improved flavor and odor.

9. The process of Claim 8, further comprising the step of bleaching the polysaccharide prior to steam-stripping by bringing the polysaccharide into contact with a bleaching agent, selected from the group consisting of chlorite salts, hypochlorite salts, peroxides, persulfate salts, permanganate salts, chlorine dioxide and ozone, for a period of time effective to improve the flavor, odor and/or color of the polysaccharide without substantial degradation of the polysaccharide.

10. The process of Claim 8, wherein the polysaccharide slurry at a viscosity less than 300 cps is fed at a flow rate of 0.106 to 13.2 l/min/m² (0.03 to 3.75 gal/min/ft²).

11. The process of Claim 8, wherein the process is continuous.

12. A low temperature steam stripping process for removal of undesirable flavors and odors from polysaccharides, comprising the steps:
a) making slurry of the polysaccharide at 1 to 40% solids in an aqueous medium;
b) feeding the polysaccharide slurry into a steam-stripping apparatus;
c) maintaining the steam-stripping apparatus under vacuum;
d) feeding a current of steam past the polysaccharide slurry in the apparatus at a temperature less than 100°C;
e) removing the steam from the apparatus; and
f) recovering the steam-stripped polysaccharide;
wherein the polysaccharide is characterized by improved flavor and odor, further comprising at least one process step selected from the group consisting of
a) bleaching the steam-stripped polysaccharide by bringing the steam-stripped polysaccharide into contact with a bleaching agent selected from peroxides and ozon;
b) feeding the steam-stripped polysaccharide into an ultrafiltration apparatus fitted with a membrane having a molecular weight cutoff minimum of 1,000;
c) feeding the steam-stripped polysaccharide at a flow rate of 0.0035 to 35.2 1/min/m² (0.001 to 10.0 gal/min/ft²) into an ion exchange apparatus; and
d) any combination thereof:

13. A low temperature steam stripping process for removal of undesirable flavors and odors from polysaccharides, comprising the steps:
a) making slurry of the polysaccharide at 1 to 40% solids in an aqueous medium;
b) feeding the polysaccharide slurry into a steam-stripping apparatus;
c) maintaining the steam-stripping apparatus under vacuum;
d) feeding a current of steam past the polysaccharide slurry in the apparatus at a temperature less than 100°C;
e) removing the steam from the apparatus; and
f) recovering the steam-stripped polysaccharide;
wherein the polysaccharide is characterized by improved flavor and odor, further comprising at least one process step selected from the group consisting of
a) bleaching the polysaccharide slurry by bringing the dispersed polysaccharide into contact with a bleaching agent;
b) feeding the polysaccharide slurry into an ultrafiltration apparatus fitted with a membrane having a molecular weight cutoff minimum 1,000;
c) feeding the polysaccharide slurry at a flow rate of 0.0035 to 35.2 1/min/m² (0.001 to 10.0 gal/min/ft²) into an ion exchange apparatus; and
d) any combination thereof;
wherein the process step is carried out before the polysaccharide has been steam-stripped and after the polysaccharide has been slurried.

14. The process of one of Claims 1 to 7, wherein the polysaccharide is selected from the group consisting of starch(es), gum(s), cellulose(s), and heteropolysaccharide(s) from microbial, animal and plant sources, and derivative(s) thereof and crosslinked product(s) thereof, and hydrolysates thereof, and combination(s) thereof.

15. The process of Claim 14, wherein the polysaccharide hydrolysate is a hydrolyzed starch, an oxidized starch, a bleached starch, a converted starch, an enzyme modified starch, a maltodextrin, a pyrodextrin, short chain amylose, a hydrolyzed food gum and a hydrolyzed food fiber, and derivatives thereof and crosslinked products thereof, and combinations thereof.

16. The process of Claim 14, wherein the polysaccharide hydrolysate is an octenylsuccinic anhydride derivative of a waxy maize or a tapioca dextrin; an enzyme-converted tapioca or potato starch, having a DE of 0.5 to 5; or a tapioca, corn or potato dextrin.

17. The process of one of Claims 8 to 13, wherein the polysaccharide is selected from the the group consisting of starch(es), gum(s), cellulose(s), and heteropolysaccharide(s) from microbial, animal and plant sources, and derivative(s) thereof and crosslinked product(s) thereof, and hydrolysates thereof, and combination(s) thereof.

18. A process for preparing an edible product, comprising 0.05 to 100% polysaccharide(s) and comprising the steps:
a) removing undesirable flavors, odors and/or colors from the polysaccharide by a process according to one of Claims 1 to 13;
b) recovering the purified polysaccharide; and
c) using the recovered polysaccharide as an ingredient in the preparation of an edible product;
wherein the edible product has been improved by the removal of undesirable flavor, odor and/or color from the polysaccharide.

19. The process of Claim 18, wherein the improved edible product is selected from the group consisting of pharmaceutical(s), and polysaccharide-containing food(s).

20. A process for preparing an food, comprising 0.05 to 100% polysaccharide and comprising the steps:
a) degrading a polysaccharide with acid, heat or enzyme treatment, or a combination thereof, to provide a polysaccharide having a D.E. of 0.5 to 20;
b) dispersing the polysaccharide in an aqueous medium at 1 to 40% solids;
c) removing undesirable flavor, odor and/or color from the dispersed polysaccharide by a process according to one of Claims 1 to 13;
d) recovering the purified polysaccharide; and
e) using the recovered polysaccharide as an ingredient in the preparation of a food,
wherein the food has been improved by the removal of undesirable flavor, odor and/or color from the polysaccharide.

21. The process of Claim 20, wherein the improved food is selected from the group consisting of low or no fat spread, margarine, frozen dessert, low fat sour cream, low fat cheese, fortified skim milk, white sauce, cream sauce, alfredo sauce, cheese sauce, frozen sauce, canned sauce, salad dressing, cream soup, soup, cheese spread, coffee whitener, dry cocoa mix, whipped dairy topping, artificial sweetener, pudding, pie filling, cake, baked goods, pastry, low fat baked goods, low fat salad dressing, low fat dairy products, and polysaccharide-containing foods.

## Patentansprüche

1. Wasserdampfdestillationsverfahren zum Entfernen von unerwünschten Geschmäckern und Gerüchen aus Polysacchariden, umfassend die Schritte
a) Dispergieren des Polysaccharids auf 1 bis 40% Feststoffgehalt in ein wäßriges Medium,
b) Lösen des dispergierten Polysaccharids,
c) Einbringen des gelösten Polysaccharids in eine Kolonne zur Wasserdampfdestillation, die mit inertem Packmaterial gefüllt ist,
d) Leiten eines Dampfgegenstroms bei einem Dampfdruck von 0,35 bis 21,1 kg/cm² (5 bis 300 psig) über das gelöste Polysaccharid in der Vorrichtung,
e) Entfernen des Dampfes aus der Vorrichtung und
f) Gewinnen des gelösten Polysaccharids,
wobei das Polysaccharid durch einen verbesserten Geschmack und Geruch gekennzeichnet ist.

2. Verfahren nach Anspruch 1, darüber hinaus umfassend den Schritt des Bleichens des dispergierten Polysaccharids vor der Wasserdampfdestillation durch Inkontaktbringen des Polysaccharids mit einem Bleichmittel, ausgewählt aus der Chloritsalze, Hypochloritsalze, Peroxide, Persulfatsalze, Permanganatsalze, Chlordioxid und Ozon umfassenden Gruppe, für eine Zeitspanne, die wirksam ist, den Geschmack, Geruch und/oder die Farbe des Polysaccharids zu verbessern, ohne das Polysaccharid im wesentlichen abzubauen.

3. Verfahren nach Anspruch 1, wobei das gelöste Polysaccharid bei einer Temperatur von 80 bis 200°C bei einer Flußrate von 0,106 bis 13,2 l/min/m² (0,03 bis 3,75 gal/min/ft²) über Dampf geleitet wird.

4. Verfahren nach Anspruch 1, wobei das Verfahren kontinuierlich ist.

5. Verfahren nach Anspruch 1, wobei der Dampf bei einer Temperatur von 55 bis 200°C eingeleitet wird.

6. Wasserdampfdestillationsverfahren zum Entfernen von unerwünschten Geschmäckern und Gerüchen aus Polysacchariden, umfassend die Schritte
a) Dispergieren des Polysaccharids mit 1 bis 40% Feststoffen in einem wäßrigen Medium,
b) Lösen des dispergierten Polysaccharids,
c) Einbringen des gelösten Polysaccharids in eine Vorrichtung zur Wasserdampfdestillation,
d) Leiten eines Dampfstromes über das gelöste Polysaccharid in der Vorrichtung,
e) Entfernen des Dampfes aus der Vorrichtung und
f) Gewinnen des gelösten Polysaccharids,
wobei das Polysaccharid durch einen verbesserten Geschmack und Geruch gekennzeichnet ist, und das Verfahren darüber hinaus mindestens einen Verfahrensschritt umfaßt, der aus der Gruppe bestehend aus
a) Bleichen des mittels Wasserdampfdestillation behandelten Polysaccharids, indem dieses Polysaccharid mit einem Bleichmittel, ausgewählt aus Peroxiden und Ozon, in Kontakt gebracht wird,
b) Einbringen des mittels Wasserdampfdestillation behandelten Polysaccharids in eine Ultrafiltrationsvorrichtung, ausgestattet mit einer Membran, die ein Molekulargewichtsrückhaltevermögen von mindestens 1000 hat,
c) Leiten des mittels Wasserdampfdestillation behandelten Polysaccharids durch mindestens eine Kolonne, die mit vorgewaschener, granulärer, aktivierter Aktivkohle bepackt ist, bei einer Flußrate von 0,1 bis 20,0 Füllvolumen/Stunde, wobei die Kolonne mit angefeuchteter granulärer Aktivkohle beladen, nochmals gewaschen und vorgeheizt worden ist,
d) Einbringen des mittels Wasserdampfdestillation behandelten Polysaccharids bei einer Flußrate von 0,0035 bis 35,2 l/min/m² (0,001 bis 10,0 gal/min/ft²) in eine Ionenaustauschervorrichtung und
e) jeglicher Kombination davon
ausgewählt ist.

7. Wasserdampfdestillationsverfahren zum Entfernen von unerwünschten Geschmäckern und Gerüchen aus Polysacchariden, umfassend die Schritte
a) Dispergieren des Polysaccharids auf 1 bis 40% Feststoffgehalt in ein wäßriges Medium,
b) Lösen des dispergierten Polysaccharids,
c) Einbringen des gelösten Polysaccharids in eine Vorrichtung zur Wasserdampfdestillation,
d) Leiten eines Dampfstromes über das gelöste Polysaccharid in der Vorrichtung,
e) Entfernen des Dampfes aus der Vorrichtung und
f) Gewinnen des gelösten Polysaccharids,
wobei das Polysaccharid durch einen verbesserten Geschmack und Geruch gekennzeichnet ist, und das Verfahren darüber hinaus mindestens einen Verfahrensschritt umfaßt, der aus der Gruppe bestehend aus
a) Bleichen des mittels Wasserdampfdestillation behandelten Polysaccharids, indem dieses Polysaccharid mit einem Bleichmittel in Kontakt gebracht wird,
b) Einbringen des mittels Wasserdampfdestillation behandelten Polysaccharids in eine Ultrafiltrationsvorrichtung, ausgestattet mit einer Membran, die ein Molekulargewichtsrückhaltevermögen von mindestens 1000 hat,
c) Leiten des mittels Wasserdampfdestillation behandelten Polysaccharids durch mindestens eine Kolonne, die mit vorgewaschener, granulärer Aktivkohle bepackt ist, bei einer Flußrate von 0,1 bis 20,0 Füllvolumen/Stunde, wobei die Kolonne mit angefeuchteter granulärer Aktivkohle beladen, nochmals gewaschen und vorgeheizt worden ist,
d) Einbringen des mittels Wasserdampfdestillation behandelten Polysaccharids bei einer Flußrate von 0,0035 bis 35,2 l/min/m² (0,001 bis 10,0 gal/min/ ft²) in eine Ionenaustauschervorrichtung und
e) jeglicher Kombination davon
ausgewählt ist, wobei der Verfahrensschritt vor der Wasserdampfdestillation des Polysaccharids und nach dem Lösen des Polysaccharids durchgeführt wird.

8. Wasserdampfdestillationsverfahren bei niedriger Temperatur zum Entfernen von unerwünschten Geschmäckern und Gerüchen aus unlöslichen Polysacchariden, umfassend die Schritte:
a) Herstellen einer Aufschlämmung des Polysaccharids auf 1 bis 40% Feststoffgehalt in einem wäßrigen Medium,
b) Einbringen der Polysaccharidaufschlämmung in eine Kolonne zur Wasserdampfdestillation, die mit inertem Packmaterial gefüllt ist,
c) Aufrechterhalten von Vakuum in der Kolonne zur Wasserdampfdestillation bei einem Kolonnendruck von -0,35 bis -1,02 kg/cm² (-5 bis -14,5 psig),
d) Leiten eines Dampfgegenstroms über die Polysaccharidaufschlämmung in der Kolonne bei einer Temperatur von weniger als 100°C,
e) Entfernen des Dampfes aus der Kolonne und
f) Gewinnen des durch Wasserdampfdestillation behandelten Polysaccharids,
wobei das Polysaccharid durch verbesserten Geschmack und Geruch gekennzeichnet ist.

9. Verfahren nach Anspruch 8, darüber hinaus umfassend den Schritt des Bleichens des dispergierten Polysaccharids vor der Wasserdampfdestillation durch Inkontaktbringen des Polysaccharids mit einem Bleichmittel, ausgewählt aus der aus Chloritsalzen, Hypochloritsalzen, Peroxiden, Persulfatsalzen, Permanganatsalzen, Chlordioxid und Ozon bestehenden Gruppe, für eine Zeitspanne, die wirksam ist, den Geschmack, Geruch und/oder die Farbe des Polysaccharids zu verbessern, ohne das Polysaccharid im wesentlichen abzubauen.

10. Verfahren nach Anspruch 8, wobei die Polysaccharidaufschlämmung bei einer Viskosität von weniger als 300 cps bei einer Flußrate von 0,106 bis 13,2 l/min/m² (0,03 bis 3,75 gal/min/ft²) eingebracht wird.

11. Verfahren nach Anspruch 8, wobei das Verfahren kontinuierlich ist.

12. Wasserdampfdestillationsverfahren bei niedriger Temperatur zum Entfernen von unerwünschten Geschmäckern und Gerüchen aus Polysacchariden, umfassend die Schritte:
a) Herstellen einer Aufschlämmung des Polysaccharids auf 1 bis 40% Feststoffgehalt in einem wäßrigen Medium,
b) Einbringen der Polysaccharidaufschlämmung in eine Vorrichtung zur Wasserdampfdestillation,
c) Aufrechterhalten von Vakuum in der Vorrichtung zur Wasserdampfdestillation,
d) Leiten eines Dampfstroms über die Polysaccharidaufschlämmung in der Vorrichtung bei einer Temperatur von weniger als 100°C,
e) Entfernen des Dampfes aus der Vorrichtung und
f) Gewinnen des durch Wasserdampfdestillation behandelten Polysaccharids,
wobei das Polysaccharid durch verbesserten Geschmack und Geruch gekennzeichnet ist, und das Verfahren darüber hinaus mindestens einen Verfahrensschritt umfaßt, der aus der aus
a) Bleichen des mittels Wasserdampfdestillation behandelten Polysaccharids, indem das durch Wasserdampfdestillation behandelte Polysaccharid mit einem Bleichmittel, ausgewählt aus Peroxiden und Ozon, in Kontakt gebracht wird,
b) Einbringen des mittels Wasserdampfdestillation behandelten Polysaccharids in eine Ultrafiltrationsvorrichtung, ausgestattet mit einer Membran, die ein Molekulargewichtsrückhaltevermögen von mindestens 1000 hat,
c) Einbringen des mittels Wasserdampfdestillation behandelten Polysaccharids bei einer Flußrate von 0,0035 bis 35,2 l/min/m² (0,001 bis 10,0 gal/min/ft²) in eine Ionenaustauschervorrichtung und
e) jeglicher Kombination davon
bestehenden Gruppe ausgewählt ist.

13. Wasserdampfdestillationsverfahren bei niedriger Temperatur zum Entfernen von unerwünschten Geschmäckern und Gerüchen aus Polysacchariden, umfassend die Schritte:
a) Herstellen einer Aufschlämmung des Polysaccharids auf 1 bis 40% Feststoffgehalt in einem wäßrigen Medium,
b) Einbringen der Polysaccharidaufschlämmung in eine Vorrichtung zur Wasserdampfdestillation,
c) Aufrechterhalten von Vakuum in der Vorrichtung zur Wasserdampfdestillation
d) Leiten eines Dampfstroms über die Polysaccharidaufschlämmung in der Vorrichtung bei einer Temperatur von weniger als 100°C,
e) Entfernen des Dampfes aus der Vorrichtung und
f) Gewinnen des durch Wasserdampfdestillation behandelten Polysaccharids,
wobei das Polysaccharid durch verbesserten Geschmack und Geruch gekennzeichnet ist, und das Verfahren darüber hinaus mindestens einen Verfahrensschritt umfaßt, der aus der aus
a) Bleichen der Polysaccharidaufschlämmung, indem das dispergierte Polysaccharid mit einem Bleichmittel in Kontakt gebracht wird,
b) Einbringen der Polysaccharidaufschlämmung in eine Ultrafiltrationsvorrichtung, ausgestattet mit einer Membran, die ein Molekulargewichtsrückhaltevermögen von mindestens 1000 hat,
c) Einbringen der Polysaccharidaufschlämmung bei einer Flußrate von 0,0035 bis 35,2 l/min/m² (0,001 bis 10,0 gal/min/ft²) in eine Ionenaustauschervorrichtung und
d) jeglicher Kombination davon
bestehenden Gruppe ausgewählt ist, wobei der Verfahrensschritt vor der Wasserdampfdestillation des Polysaccharids und nach dem das Polysaccharid aufgeschlämmt worden ist durchgeführt wird.

14. Verfahren nach einem der Ansprüche 1 bis 7, wobei das Polysaccharid ausgewählt ist aus der aus Stärke(n), Gummi(s), Cellulose(n) und einem oder mehreren Heteropolysaccharid(en) aus mikrobiologischen, tierischen oder pflanzlichen Quellen und einem oder mehreren Derivaten davon und einem vernetzten Produkt oder vernetzten Produkten davon und Hydrolysaten davon und einer oder mehrere Kombinationen davon bestehenden Gruppe.

15. Verfahren nach Anspruch 14, wobei das Hydrolysat des Polysaccharids eine hydrolysierte Stärke, eine oxidierte Stärke, eine gebleichte Stärke, eine konvertierte Stärke, eine enzymmodifizierte Stärke, ein Maltodextrin, ein Pyrodextrin, eine kurzkettige Amylose, ein hydrolysierter Nahrungsmittelgummi und eine hydrolysierte Nahrungsmittelfaser und Derivate davon und vernetzte Produkte davon und Kombinationen davon ist.

16. Verfahren nach Anspruch 14, wobei das Hydrolysat des Polysaccharids ein Octenylbernsteinsäureanhydridderivat eines Wachsmaises oder Tapiokadextrins, eine durch Enzyme konvertierte Tapioka- oder Kartoffelstärke mit einem DE von 0,5 bis 5 oder ein Tapioka-, Mais- oder Kartoffeldextrin ist.

17. Verfahren nach einem der Ansprüche 8 bis 13, wobei das Polysaccharid aus der aus Stärke(n), Gummi(s), Cellulose(n), einem oder mehreren Heteropolysaccharid(en) aus mikrobiologischen, tierischen und pflanzlichen Quellen und einem oder mehreren Derivat(en) davon und ein oder mehreren vernetzten Produkten davon und ein oder mehreren Hydrolysaten davon und einer oder mehreren Kombinationen davon bestehenden Gruppe ausgewählt ist.

18. Verfahren zur Herstellung eines eßbaren 0,05 bis 100% Polysaccharid(e) enthaltenden Produktes, das folgende Schritte umfaßt:
a) Entfernen von unerwünschten Geschmäckern, Gerüchen und/oder Farben aus dem Polysaccharid mittels eines Verfahrens nach einem der Ansprüche 1 bis 13,
b) Gewinnen des gereinigten Polysaccharids und
c) Verwenden des gewonnenen Polysaccharids als ein Inhaltsstoff zur Herstellung eines eßbaren Produkts,
wobei das eßbare Produkt dadurch verbessert worden ist, daß unerwünschter Geschmack, Geruch und/oder unerwünschte Farbe aus dem Polysaccharid entfernt worden ist.

19. Verfahren nach Anspruch 18, wobei das verbesserte eßbare Produkt aus der aus einem oder mehreren Pharmazeutika und einem oder mehreren polysaccharidhaltigen Nahrungsmitteln bestehenden Gruppe ausgewählt ist.

20. Verfahren zur Herstellung eines 0,05 bis 100% Polysaccharid enthaltenden Nahrungsmittels, das folgende Schritte umfaßt:
a) Abbauen des Polysaccharids durch Säure, Wärme oder Enzymbehandlung oder eine Kombination davon, um ein Polysaccharid mit einem DE von 0,5 bis 20 zur Verfügung zu stellen,
b) Dispergieren des Polysaccharids auf 1 bis 40% Feststoffgehalt in ein wäßriges Medium,
c) Entfernen von unerwünschtem Geschmack, Geruch und/oder Farbe aus dem dispergierten Polysaccharid mittels eines Verfahrens nach einem der Ansprüche 1 bis 13,
d) Gewinnen des gereinigten Polysaccharids und
e) Verwenden des gewonnnen Polysaccharids als ein Inhaltsstoff bei der Herstellung von Nahrungsmitteln,
wobei das Nahrungsmittel dadurch verbessert worden ist, daß unerwünschter Geschmack, Geruch und/oder unerwünschte Farbe aus dem Polysaccharid entfernt worden ist.

21. Verfahren nach Anspruch 20, wobei das verbesserte Nahrungsmittel aus der aus fettarmen oder fettfreien Aufstrichen, Margarine, gefrorenem Dessert, fettarmer saurer Sahne, fettarmem Käse, konzentrierter Magermilch, weißer Soße, Sahnesauce, Alfredosauce, Käsesauce, gefrorener Sauce, Sauce in Dosen, Salatdressing, Cremesuppe, Suppe, Käseaufstrich, Kaffeesahne, trockenen Kakaomischungen, geschlagener Glasur aus Molkereiprodukten, künstlichem Süßstoff, Pudding, Kuchenfüllung, Kuchen, Backwaren, Konditorwaren, fettarmen Backwaren, fettarmem Salatdressing, fettarmen Molkereiprodukten und polysaccharidhaltigen Nahrungsmitteln bestehenden Gruppe ausgewählt ist.

## Revendications

1. Procédé d'entraînement à la vapeur d'eau pour éliminer les saveurs et odeurs indésirables de polysaccharides, comprenant les étapes consistant
a) à disperser le polysaccharide à une teneur de 1 à 40 % en matières solides dans un milieu aqueux ;
b) à solubiliser le polysaccharide dispersé ;
c) à introduire le polysaccharide solubilisé dans une colonne d'entraînement à la vapeur d'eau munie d'une matière inerte de garnissage ;
d) à introduire un contre-courant de vapeur d'eau contre le polysaccharide solubilisé dans l'appareil, à une pression de vapeur d'eau de 0,35 à 21,1 kg/cm² (5 à 300 psig) ;
f) à évacuer la vapeur d'eau de l'appareil ; et
e) à recueillir le polysaccharide solubilisé ;
dans lequel le polysaccharide est caractérisé par une saveur et une odeur améliorées.

2. Procédé suivant la revendication 1, comprenant en outre l'étape de blanchiment du polysaccharide dispersé avant l'entraînement à la vapeur d'eau en mettant le polysaccharide en contact avec un agent de blanchiment, choisi dans le groupe comprenant des chlorites, des hypochlorites, des peroxydes, des persulfates, des permanganates, le dioxyde de chlore et l'ozone, pendant un temps efficace pour améliorer la saveur, l'odeur et/ou la couleur du polysaccharide sans dégradation notable de ce polysaccharide.

3. Procédé suivant la revendication 1, dans lequel le polysaccharide solubilisé à une température de 80 à 200°C est introduit contre la vapeur d'eau à une température de 80 à 200°C à un débit de 0,106 à 13,2 l/min/m² (0,03 à 3,75 gal/min/ft²).

4. Procédé suivant la revendication 1, qui est un procédé continu.

5. Procédé suivant la revendication 1, dans lequel la vapeur d'eau est introduite à une température de 55 à 200°C.

6. Procédé d'entraînement à la vapeur d'eau pour éliminer des saveurs et odeurs indésirables de polysaccharides, comprenant les étapes consistant :
a) à disperser le polysaccharide à une teneur en matières solides de 1 à 40 % dans un milieu aqueux ;
b) à solubiliser le polysaccharide dispersé ;
c) à introduire le polysaccharide solubilisé dans un appareil d'entraînement à la vapeur d'eau ;
d) à introduire un contre-courant de vapeur d'eau au-delà du polysaccharide solubilisé dans l'appareil ;
f) à évacuer la vapeur d'eau de l'appareil ; et
e) à recueillir le polysaccharide solubilisé ;
dans lequel le polysaccharide est caractérisé par une saveur et une odeur améliorées, comprenant en outre au moins une étape de procédé choisie dans le groupe consistant en
a) le blanchiment du polysaccharide ayant subi l'entraînement à la vapeur d'eau en mettant le polysaccharide ayant subi l'entraînement à la vapeur d'eau en contact avec un agent de blanchiment choisi entre des peroxydes et l'ozone ;
b) à introduire le polysaccharide ayant subi un entraînement à la vapeur d'eau dans un appareil d'ultrafiltration équipé d'une membrane ayant un minimum d'exclusion de poids moléculaire égal à 1000 ;
c) à faire passer le polysaccharide ayant subi un entraînement à la vapeur d'eau à travers au moins une colonne garnie de charbon actif granulaire prélavé à un débit de 0,1 a 20,0 volumes de lit/heure, colonne qui a été chargée avec des granules de charbon humides, lavée par inversion de courant et préchauffée ;
d) à introduire le polysaccharide ayant subi un entraînement à la vapeur d'eau à un débit de 0,0035 à 35,2 l/min/m² (0,001 à 10,0 gal/min/ft²) dans un appareil échangeur d'ions ; et
e) n'importe quelle association de ces étapes.

7. Procédé d'entraînement à la vapeur d'eau pour éliminer des saveurs et odeurs indésirables de polysaccharides, comprenant les étapes consistant :
a) à disperser le polysaccharide à une teneur en matières solides de 1 à 40 % dans un milieu aqueux ;
b) à solubiliser le polysaccharide dispersé ;
c) à introduire le polysaccharide solubilisé dans un appareil d'entraînement à la vapeur d'eau ;
d) à introduire un courant de vapeur d'eau au-delà du polysaccharide solubilisé dans l'appareil ;
f) à évacuer la vapeur d'eau de l'appareil ; et
e) à recueillir le polysaccharide solubilisé ;
dans lequel le polysaccharide est caractérisé par une saveur et une odeur améliorées, comprenant en outre au moins une étape de procédé choisie dans le groupe consistant en
a) le blanchiment du polysaccharide solubilisé en mettant le polysaccharide solubilisé en contact avec un agent de blanchiment ;
b) l'introduction du polysaccharide solubilisé dans un appareil d'ultrafiltration équipé d'une membrane ayant un minimum d'exclusion de poids moléculaire égal à 1000 ;
c) le passage du polysaccharide solubilisé à travers au moins une colonne garnie de charbon actif granulaire prélavé à un débit de 0,1 à 20,0 volumes de lit/heure, colonne qui a été chargée avec des granules de charbon humides, lavée par inversion de courant et préchauffée ;
d) l'introduction du polysaccharide solubilisé à un débit de 0,0035 à 35,2 l/min/m² (0,001 à 10,0 gal/min/ft²) dans un appareil échangeur d'ions ; et
e) n'importe quelle association de ces étapes,
dans lequel l'étape de procédé est mise en oeuvre avant de soumettre le polysaccharide à un entraînement à la vapeur d'eau et après la solubilisation du polysaccharide.

8. Procédé d'entraînement à la vapeur d'eau à basse température pour éliminer des saveurs et odeurs indésirables de polysaccharides insolubles, comprenant les étapes consistant :
a) à préparer une suspension du polysaccharide à une teneur en matières solides de 1 à 40 % dans un milieu aqueux ;
b) à introduire la suspension de polysaccharide dans une colonne d'entraînement à la vapeur d'eau munie d'une matière inerte de garnissage ;
c) à maintenir l'appareil d'entraînement à la vapeur d'eau sous vide à une pression de colonne de -0,35 à -1,02 kg/cm² (-5 à -14,5 psig) ;
d) à introduire un contre-courant de vapeur d'eau contre la suspension de polysaccharide dans la colonne à une température inférieure à 100°C ;
e) à évacuer la vapeur d'eau de la colonne ; et
f) à recueillir le polysaccharide ayant subi un entraînement à la vapeur d'eau ;
dans lequel le polysaccharide est caractérisé par une saveur et une odeur améliorées.

9. Procédé suivant la revendication 8, comprenant en outre l'étape de blanchiment du polysaccharide avant l'entraînement à la vapeur d'eau en mettant le polysaccharide en contact avec un agent de blanchiment choisi dans le groupe consistant en chlorites, hypochlorites, peroxydes, persulfates, permanganates, dioxydes de chlore et ozone, pendant un temps efficace pour améliorer la saveur, l'odeur et/ou la couleur du polysaccharide sans dégradation notable de ce polysaccharide.

10. Procédé suivant la revendication 8, dans lequel la suspension de polysaccharide à une viscosité inférieure à 300 cps est introduite à un débit de 0,106 à 13,2 l/min/m² (0,03 à 3,75 gal/min/ft²).

11. Procédé suivant la revendication 8, qui est un procédé continu.

12. Procédé d'entraînement à la vapeur d'eau à basse température pour éliminer des saveurs et odeurs indésirables de polysaccharides, comprenant les étapes consistant :
a) à préparer une suspension du polysaccharide à une teneur en matières solides de 1 à 40 % dans un milieu aqueux ;
b) à introduire la suspension de polysaccharide dans un appareil d'entraînement à la vapeur d'eau ;
c) à maintenir l'appareil d'entraînement à la vapeur d'eau sous vide ;
d) à introduire un courant de vapeur d'eau au-delà de la suspension de polysaccharide dans l'appareil à une température inférieure à 100°C ;
e) à évacuer la vapeur d'eau de l'appareil ; et,
f) à recueillir le polysaccharide ayant subi un entraînement à la vapeur d'eau ;
dans lequel le polysaccharide est caractérisé par une saveur et une odeur améliorées, comprenant en outre au moins une étape de procédé choisie dans le groupe consistant en
a) le blanchiment du polysaccharide ayant subi un entraînement à la vapeur d'eau en mettant le polysaccharide ayant subi un entraînement à la vapeur d'eau en contact avec un agent de blanchiment choisi entre des peroxydes et l'ozone ;
b) l'introduction du polysaccharide ayant subi un entraînement à la vapeur d'eau dans un appareil d'ultrafiltration équipé d'une membrane ayant un minimum d'exclusion de poids moléculaire égal à 1000 ;
c) l'introduction du polysaccharide ayant subi un entraînement à la vapeur d'eau à un débit de 0,0035 à 35,2 l/min/m² (0,001 à 10,0 gal/min/ft²) dans un appareil échangeur d'ions ; et
d) n'importe quelle association de ces étapes.

13. Procédé d'entraînement à la vapeur d'eau à basse température pour éliminer des saveurs et odeurs indésirables de polysaccharides, comprenant les étapes consistant :
a) à préparer une suspension du polysaccharide à une teneur en matières solides de 1 à 40 % dans un milieu aqueux ;
b) à introduire la suspension de polysaccharide dans un appareil d'entraînement à la vapeur d'eau ;
c) à maintenir l'appareil d'entraînement à la vapeur d'eau sous vide ;
d) à introduire un courant de vapeur d'eau au-delà de la suspension de polysaccharide dans l'appareil à une température inférieure à 100°C ;
e) à évacuer la vapeur d'eau de l'appareil ; et
f) à recueillir le polysaccharide ayant subi un entraînement à la vapeur d'eau ;
dans lequel le polysaccharide est caractérisé par une saveur et une odeur améliorées, compreant en outre au moins une étape de procédé choisie dans le groupe consistant en
a) le blanchiment de la suspension de polysaccharide en mettant le polysaccharide dispersé en contact avec un agent de blanchiment ;
b) l'introduction de la suspension de polysaccharide dans un appareil d'ultrafiltration équipé d'une membrane ayant un minimum d'exclusion de poids moléculaire égal à 1000 ;
c) l'introduction de la suspension de polysaccharide à un débit de 0,0035 à 35,2 l/min/m² (0,01 à 10,0 gal/min/ft²) dans un appareil échangeur d'ions ; et
d) n'importe quelle association de ces étapes ;
dans lequel l'étape de procédé est mise en oeuvre avant l'entraînement à la vapeur d'eau du polysaccharide et après la mise en suspension du polysaccharide.

14. Procédé suivant l'une quelconque des revendications 1 à 7, dans lequel le polysaccharide est choisi dans le groupe consistant en un ou plusieurs amidons, une ou plusieurs gommes, une ou plusieurs celluloses et un ou plusieurs hétéropolysaccharides d'origine microbienne, d'origine animale et d'origine végétale, et le ou les dérivés et le ou les produits réticulés de ces polysaccharides, ainsi que leurs hydrolysats et la ou leurs associations.

15. Procédé suivant la revendication 14, dans lequel l'hydrolysat de polysaccharide est un amidon hydrolysé, un amidon oxydé, un amidon blanchi, un amidon saccharifié, un amidon modifié avec un enzyme, une maltodextrine, une pyrodextrine, l'amylose à chaîne courte, une gomme alimentaire hydrolysée, une fibre alimentaire hydrolysée, un de leurs dérivés, un de leurs produits réticulés, ou une de leurs associations.

16. Procédé suivant la revendication 14, dans lequel l'hydrolysat de polysaccharide est un dérivé d'anhydride octénylsuccinique d'une dextrine de maïs cireux ou de manioc ; une fécule de manioc ou de pomme de terre saccharifiée avec un enzyme, ayant une valeur d'équivalent en dextrose (ED) de 0,5 à 5 ; ou une dextrine de manioc, de maïs ou de pomme de terre.

17. Procédé suivant l'une des revendications 8 à 13, dans lequel le polysaccharide est choisi dans le groupe consistant en un ou plusieurs amidons, une ou plusieurs gommes, une ou plusieurs celluloses et un ou plusieurs hétéropolysaccharides d'origine microbienne, d'origine animale et d'origine végétale, et le ou les dérivés et le ou les produits réticulés de ces polysaccharides, ainsi que leurs hydrolysats et une ou plusieurs de leurs associations.

18. Procédé pour la préparation d'un produit comestible, comprenant 0,05 à 100 % d'un ou plusieurs polysaccharides et comprenant les étapes consistant :
a) à éliminer les saveurs, les odeurs et/ou les couleurs indésirables du polysaccharide par un procédé suivant l'une des revendications 1 à 13 ;
b) à recueillir le polysaccharide purifié ; et
c) à utiliser le polysaccharide recueilli comme ingrédient dans la préparation d'un produit comestible ; dans lequel le produit comestible a été amélioré par élimination des saveurs, des odeurs et/ou des couleurs indésirables du polysaccharide.

19. Procédé suivant la revendication 18, dans lequel le produit comestible amélioré est choisi dans le groupe consistant en un ou plusieurs agents pharmaceutiques et une ou plusieurs denrées alimentaires contenant des polysaccharides.

20. Procédé pour la préparation d'un produit alimentaire, comprenant 0,05 à 100 % d'un polysaccharide et comprenant les étapes consistant :
a) à soumettre un polysaccharide à une dégradation par un traitement avec un acide, un traitement par la chaleur ou un traitement enzymatique ou une de leurs associations, pour produire un polysaccharide ayant une valeur de ED de 0,5 à 20 ;
b) à disperser le polysaccharide dans un milieu aqueux à une teneur en matières solides de 1 à 40 % ;
c) à éliminer la saveur, l'odeur et/ou la couleur indésirables du polysaccharide dispersé par un procédé suivant une des revendications 1 à 13 ;
d) à recueillir le polysaccharide purifié ; et
e) à utiliser le polysaccharide recueilli comme ingrédient dans la préparation d'un produit alimentaire,
dans lequel le produit alimentaire a été amélioré par élimination de la saveur, de l'odeur et/ou de la couleur indésirables du polysaccharide.

21. Procédé suivant la revendication 20, dans lequel le produit alimentaire amélioré est choisi dans le groupe consistant en un produit à tartiner à teneur faible ou nulle en matières grasses, la margarine, un dessert congelé, une crème aigre à basse teneur en matières grasses, un fromage à basse teneur en matières grasses, du lait écrémé complété, une sauce blanche, une sauce à la crème, une sauce alfredo, une sauce au fromage, une sauce congelée, une sauce en boîte, un assaisonnement pour salade, une soupe à la crème, une soupe, un fromage à tartiner, un produit de blanchiment du café, un mélange à base de cacao déshydraté, une garniture à la crème fouettée, un édulcorant synthétique, un pudding, une garniture de tarte, un cake, des produits cuits au four, une pâte, des produits cuits au four à basse teneur en matières grasses, un assaisonnement pour salade à basse teneur en matières grasses, des produits laitiers à basse teneur en matières grasses et des denrées alimentaires contenant des polysaccharides.
